# EUROPÄISCHE PATENTSCHRIFT

(11) **EP 0 875 026 B1**
(45) Veröffentlichungstag und Bekanntmachung des Hinweises auf die Patenterteilung: **10.12.2003**
(21) Anmeldenummer: 97935445.3
(22) Anmeldetag: 22.07.1997
(51) Int. Cl.: G06F 1/24

(54) **SCHALTUNGSANORDNUNG MIT EINEM MIKROPROZESSOR**
CIRCUIT CONFIGURATION WITH A MICROPROCESSOR
CIRCUIT COMPRENANT UN MICROPROCESSEUR

(30) Priorität: 17.10.1996 DE 19642844
(43) Veröffentlichungstag der Anmeldung: 04.11.1998
(73) Patentinhaber: ROBERT BOSCH GMBH, 70442 Stuttgart (DE)
(72) Erfinder: MOHR, Thomas, D-77815 Bühl (DE)
(86) Internationale Anmeldenummer: DE9701533
(87) Internationale Veröffentlichungsnummer: WO98018072

(56) Entgegenhaltungen:
- US-A- 4 807 141
- PATENT ABSTRACTS OF JAPAN vol. 009, no. 224 (P-387), 10.September 1985 & JP 60 081651 A (NIPPON DENKI KK), 9.Mai 1985,
- PATENT ABSTRACTS OF JAPAN vol. 096, no. 008, 30.August 1996 & JP 08 110867 A (FUJITSU LTD), 30.April 1996,

## Beschreibung

### Stand der Technik

Die Erfindung bezieht sich auf eine Schaltungsanordnung mit einem Mikroprozessor, dessen Reset-Anschluß mit einem Rücksetzsignal einer Ansteuerschaltung beaufschlagbar ist.

Üblicherweise wird bei derartigen Schaltungsanordnungen die Ansteverschaltung des Reset-Anschlusses über einen Spannungsregler verwirklicht, der zur Abgabe des Rücksetzsignals ausgebildet ist.

Eine Schaltungsanordnung mit einem Mikroprozessor ist in der DE 43 02 232 A1 beschrieben, wobei ein Aufwecksignal periodisch bereitgestellt wird, um den in einem inaktiven Zustand befindlichen Mikroprozessor in einen aktiven Betriebszustand zu bringen. Über eine Ansteuerschaltung für einen Reset-Anschluß sind in dieser Druckschrift jedoch keine näheren Ausführungen gemacht.

### Vorteile der Erfindung

Der Erfindung liegt die Aufgabe zugrunde, eine Schaltungsanordnung der eingangs genannten Art bereitzustellen, mit der eine einfache Ansteuerschaltung ermöglicht wird.

Diese Aufgabe wird mit den im Patentanspruch 1 angegebenen Merkmalen gelöst. Hiernach ist also vorgesehen, daß der Reset-Anschluß zusätzlich mit einem weiteren Anschluß des Mikroprozessrs verbunden ist, der nach Beaufschlagung des Reset-Anschlusses mit dem Rücksetzsignal den Reset-Anschluß auf einem von dem Rücksetzpegel abweichenden, definierten Ausblendpegel hält.

Mit diesen Maßnahmen bewirkt lediglich ein anfänglicher Rücksetzimpuls bei der Inbetriebnahme des Mikroprozessors die Rücksetzung. Danach werden Rücksetzimpulse am Reset-Anschluß ausgeblendet. Auf diese Weise kann ein einfaches, bei der Inbetriebnahme des Mikroprozessors vorliegendes Signal, das zum Rücksetzzeitpunkt einen dem Rücksetzpegel entsprechenden Pegel annimmt und danach vom Rücksetzpegel abweichen kann, herangezogen werden, ohne daß eine aufwendige Beschaltung bzw. ein aufwendiger Spannungsregler erforderlich ist.

Eine vorteilhafte Maßnahme besteht darin, daß der weitere Anschluß durch Programmierung des Mikroprozessors auf dem Ausblendpegel gehalten ist. Nachdem der Mikroprozessor nach Wechsel des Rücksetzsignals aus dem Rücksetzpegel den Reset-Zustand verlassen hat, setzt er als einen der ersten ausgeführten Befehle den zum Reset-Anschluß parallel geschalteten weiteren Anschluß auf den Ausblendpegel und hält ihn während des Betriebszustandes des Prozessors auf diesem Pegel, so daß weitere Rücksetzsignale an dem Reset-Anschluß nicht auftreten können.

Beispielsweise kann vorgesehen sein, daß der Rücksetzpegel der L-Pegel und der Ausblendpegel der H-Pegel ist und daß der Ausblendpegel durch interne Schutzstrukturen des Mikroprozessors und eine äußere Beschaltung während des aktivierten Zustands des Mikroprozessors aufrechterhalten bleibt. Dadurch wird der Ausblendpegel definiert aufrechterhalten. Beispielsweise bestehen derartige interne Schutzstrukturen darin, daß der weitere Anschluß über eine in Sperrichtung angeschlossene Diode gegen Masse und eine weitere, in Durchlaßrichtung angeschlossene Diode auf Versorgungsspannungspotential gelegt ist. Die äußere Beschattung kann in einem einfachen Widerstand in einer Zuführleitung des Reset-Signals bestehen.

Eine einfache Möglichkeit für die Bereitstellung des Reset-Signals besteht darin, daß das Rücksetzsignal aus einem von einer Steuerschaltung zugeführten Sollwertsignal abgezweigt ist, das zusätzlich in einer Spannungsversorgungsstufe zur Reduzierung des Ruhestroms dient. Damit ist das Sollwertsignal bzw. die dieses liefernde Steuerschaltung doppelt ausgenutzt.

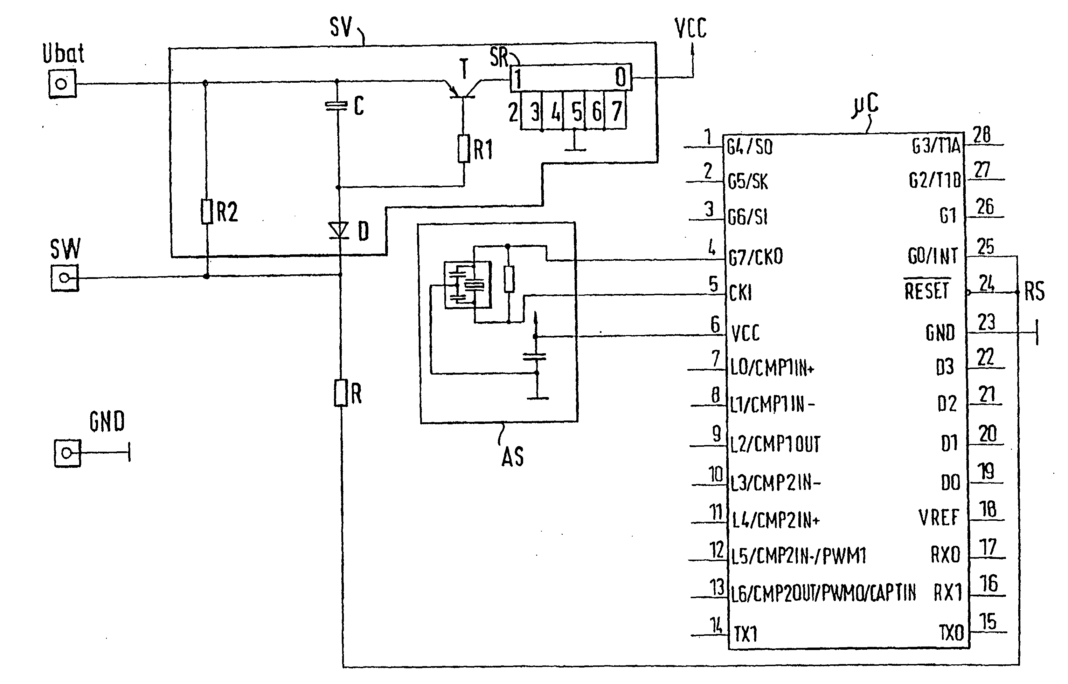

Die Erfindung wird nachfolgend anhand eines Ausführungsbeispiels unter Bezugnahme auf die Zeichnung näher erläutert. Die Figur zeigt einen Mikroprozessor µC der unter anderem einen Reset-Anschluß RESET aufweist, dem ein weiterer Anschluß GO des Mikroprozessors µC parallel geschaltet ist. Auch ein anderer Port-Anschluß könnte dem Reset-Anschluß RESET parallel geschaltet sein. Der Reset-Anschluß RESET und der weitere Anschluß GO sind über einen Widerstand R von z.B. 100 kOhm an eine ein Sollwertsignal SW liefernde (nicht gezeigte) Steuerschaltung angeschlossen. Das Sollwertsignal SW wird außerdem einer Spannungs-versorgungsstufe SV zugeleitet, die eine aus einem Schalttransistor T, Schaltungswiderständen R1 und R2 sowie einem Kondensator C und einer Diode D gebildete Schaltungsstufe und einen Spannungsregler SR aufweist, der eine stabilisierte Versorgungsspannung VCC liefert. Die Schaltungsstufe dient der Reduzierung des Ruhestroms und wird über das Sollwertsignal SW gesteuert. Die Spannungsversorgungsstufe SV wird mittels einer Batteriespannung Ubat versorgt. Gemeinsames Bezugspotential ist GND.

Auf einen weiteren in der Figur dargestellten Schaltungsabschnitt AS wird vorliegend nicht näher eingegangen.

Das von dem Sollwertsignal SW über den Widerstand R abgezweigte Rücksetzsignal RS setzt den Mikroprozessor µC beim Erreichen des L-Pegels zurück, nachdem der Mikroprozessor µC durch Anlegen der Versorgungsspannung VCC in Betrieb genommen ist. Wechselt dann das Sollwertsignal SW und damit das Rücksetzsignal RS auf den H-Pegel, so verläßt der Mikroprozessor µC den Rücksetzzustand und setzt als einen der ersten ausgeführten Befehle den zum Reset-Anschluß RESET parallel geschalteten Anschluß GO auf H-Pegel. Damit wird ein anschließender Wechsel des Reset-Anschlusses RESET auf den L-Pegel verhindert, selbst wenn das Sollwertsignal SW auf den L-Pegel wechselt, um z.B. die Spannungsversorgungsstufe SV anzusteuern. Somit wird durch die einfache Beschaltung mit dem Widerstand R und eine einfache Programmierung des Mikroprozessors µC eine zuverlässige Rücksetzfunktion verwirklicht. Beispielsweise kann damit ein einfacher, kostengünstiger Spannungsregler ohne Power-On-Reset verwendet werden.

## Patentansprüche

1. Schaltungsanordnung mit einem Mikroprozessor, dessen Reset-Anschluß mit einem Rücksetzsignal einer Ansteuerschaltung beaufschlagbar ist,
**dadurch gekennzeichnet,**
**daß** der Reset-Anschluß (RESET) zusätzlich mit einem weiteren Anschluß (GO) des Mikroprozessors (µC) verbunden ist, der nach Beaufschlagung des Reset-Anschlusses (RESET) mit dem Rücksetzsignal (RS) den Reset-Anschluß auf einem von dem Rücksetzpegel abweichenden, definierten Ausblendpegel hält.

2. Schaltungsanordnung nach Anspruch 1,
**dadurch gekennzeichnet,**
**daß** der weitere Anschluß (GO) durch Programmierung des Mikroprozessors (µC) auf dem Ausblendpegel gehalten ist.

3. Schaltungsanordnung nach Anspruch 1 oder Anspruch 2,
**dadurch gekennzeichnet,**
**daß** der Rücksetzpegel der L-Pegel und der Ausblendpegel der H-Pegel ist und
**daß** der Ausblendpegel durch interne Schutzstrukturen des Mikroprozessors (µC) und eine äußere Beschaltung (R) während des aktivierten Zustands des Mikroprozessors (µC) aufrechterhalten bleibt.

4. Schaltungsanordnung nach Anspruch 3
**dadurch gekennzeichnet,**
**daß** die äußere Beschaltung ein in einer Zuführleitung des Rücksetzsignals (RS) liegender Widerstand (R) ist.

5. Schaltungsanordnung nach einem der vorhergehenden Ansprüche,
**dadurch gekennzeichnet,**
**daß** das Rücksetzsignal (RS) aus einem von einer Steuerschaltung zugeführten Sollwertsignal (SW) abgezweigt ist, das zusätzlich in einer Spannungsversorgungsstufe (ST) zur Reduzierung des Ruhestroms dient.

## Claims

1. Circuit arrangement having a microprocessor whose reset connection can have a reset signal from an actuation circuit applied to it,
**characterized**
**in that** the reset connection (RESET) is additionally connected to a further connection (GO) on the microprocessor (µC) which, when the reset connection (RESET) has had the reset signal (RS) applied to it, holds the reset connection at a defined suppression level which differs from the reset level.

2. Circuit arrangement according to Claim 1,
**characterized**
**in that** the further connection (GO) is held at the suppression level by programming the microprocessor (µC).

3. Circuit arrangement according to Claim 1 or Claim 2,
**characterized**
**in that** the reset level is the L level and the suppression level is the H level, and
**in that** the suppression level is maintained by internal protective structures in the microprocessor (µC) and by an external circuit element (R) during the activated state of the microprocessor (µC).

4. Circuit arrangement according to Claim 3,
**characterized**
**in that** the external circuit element is a resistor (R) situated in a supply line for the reset signal (RS).

5. Circuit arrangement according to one of the preceding claims,
**characterized**
**in that** the reset signal (RS) is branched off from a setpoint signal (SW) which is supplied by a control circuit and is additionally used in a voltage supply stage (ST) to reduce the quiescent current.

## Revendications

1. Circuit comprenant un microprocesseur dont le port de reset peut recevoir un signal de réinitialisation d'un circuit d'excitation,
**caractérisé en ce que**
le port de reset (RESET) est relié également à un autre port (GO) du microprocesseur (µC) qui, après l'application du signal de réinitialisation (RS) sur le port de reset (RESET), maintient le port de reset à un niveau de suppression défini différent du niveau de réinitialisation.

2. Circuit selon la revendication 1,
**caractérisé en ce que**
le port supplémentaire (GO) est maintenu au niveau de suppression par programmation du microprocesseur (µC).

3. Circuit selon la revendication 1 ou la revendication 2,
**caractérisé en ce que**
le niveau de réinitialisation est le niveau L et le niveau de suppression le niveau H, et
le niveau de suppression reste maintenu pendant l'état activé du microprocesseur (µC) par des structures de protection internes du microprocesseur (µC) et par un équipement extérieur (R).

4. Circuit selon la revendication 3,
**caractérisé en ce que**
l'équipement extérieur est une résistance (R) située dans une ligne d'amenée du signal de réinitialisation (RS).

5. Circuit selon l'une quelconque des revendications précédentes,
**caractérisé en ce que**
le signal de réinitialisation (RS) est dévié d'un signal de valeur de consigne (SW) en provenance d'un circuit de commande, qui sert également dans un étage d'alimentation en tension (ST), à réduire le courant de repos.
